(19) Europäisches Patentamt / European Patent Office / Office européen des brevets

(11) **EP 4 177 320 A1**

(12) **EUROPEAN PATENT APPLICATION**

(43) Date of publication:
**10.05.2023 Bulletin 2023/19**

(21) Application number: **21206241.8**

(22) Date of filing: **03.11.2021**

(51) International Patent Classification (IPC):
**C09J 7/38** (2018.01)    **B44C 1/00** (2006.01)

(52) Cooperative Patent Classification (CPC):
**C09J 7/385;** B44C 1/105; C09J 2203/334;
C09J 2301/204; C09J 2427/006

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **3M Innovative Properties Company Saint Paul, MN 55133-3427 (US)**

(72) Inventors:
- **Kolowrot, Dirk**
  **41352 Korschenbroich (DE)**
- **Loescher, Claus**
  **41468 Neuss (DE)**

- **Arnolds, Oliver**
  **50737 Köln (DE)**
- **D'Hollander, Stijn Alfons Mario**
  **9100 Sint-Niklaas (BE)**
- **Opstal, Tom**
  **9270 Kalken (BE)**
- **Dehn, Ronald A.**
  **Forest Lake, MN 55025 (US)**

(74) Representative: **Mössner, Brigitte**
**3M Deutschland GmbH**
**Office of Intellectual Property Counsel**
**(PC 072P)**
**Carl-Schurz-Strasse 1**
**41453 Neuss (DE)**

(54) **ADHESIVE FILM AND METHOD OF MAKING A GRAPHIC**

(57) The present disclosure relates to an adhesive film comprising a polyvinyl chloride film having opposite first and second major sides, the first major side having an adhesive layer protected by a release liner, wherein the adhesive layer comprises a pressure sensitive adhesive, and wherein the pressure sensitive adhesive is made from a curable precursor comprising an acrylic copolymer and a crosslinker, and wherein the glass transition temperature of the acrylic copolymer is at least -30 °C, as calculated using the Fox Equation, and wherein the acrylic copolymer is made by copolymerization of a monomer composition, the monomer composition comprising

(a) a $C_1$-$C_{14}$ (meth)acrylic acid ester monomer,
(b) an acid functional, ethylenically unsaturated polar monomer, and

(c) a non-acid functional, ethylenically unsaturated polar monomer,
and wherein the amount of the $C_1$-$C_{14}$ (meth)acrylic acid ester monomer (a) is from 70 to 98 percent by weight, based on the total weight of the monomer composition, and wherein the amount of the acid functional, ethylenically unsaturated polar monomer (b) is from 1 to 15 percent by weight, based on the total weight of the monomer composition, and wherein the amount of the non-acid functional, ethylenically unsaturated polar monomer (c) is from 1 to 15 percent by weight, based on the total weight of the monomer composition.

The present disclosure further relates to a method for producing a graphic on a substrate using said adhesive film.

EP 4 177 320 A1

## Description

<u>Technical Field</u>

The present disclosure relates to an adhesive film based on polyvinyl chloride (PVC). In particular, the present disclosure relates to an adhesive film for producing graphics.

<u>Background</u>

PVC based adhesive films have been widely used in producing graphics or decorations on substrates. For example, adhesive films are used to provide advertisement, logos or company names and information on vehicles such as vans, busses, trains, trams etc. They may also be used on buildings. Typically, the adhesive film will have to remain in place for an extended period of time up to several years. Accordingly, the graphics produced with the film are exposed to a large variety of weather conditions. Particularly in so called horizontal applications, where the film is applied over a generally horizontal surface such as on the hood of a car, the weathering conditions may be particularly severe. Accordingly, the adhesive film needs to have excellent weathering stability and excellent adhesion characteristics to the surface.

Yet, after use, it is generally desirable that the graphic film can be removed without damaging the surface of the substrate which frequently may be a painted surface. In certain applications, these graphics may be of a significant size. Application of a large image graphic to substrates encounters the problem of entrapped air between the film and the substrate. Anyone who has ever attempted to hang wallpaper can appreciate the frustration that can arise when entrapped air beneath an adhesive-backed film can not be removed easily. The removal of air bubbles is labor intensive. The art has provided multiple solutions to this problem by providing air-bleed channels in the adhesive. For example, EP 0 951 518 discloses the use of channels in the adhesive to allow air bleed during application of the graphic film. In certain instances, it has been found that the presence of air bleed channels may become visible on the graphic and disturb the appeal of the graphic. Such may occur shortly after application of the film or develop over an extended period of time.

Still further, the surface of the substrate may be uneven requiring good conformability of the film. For example, when the film is used in personalization of vehicles or in decorating vehicles, the film may need to be applied over recesses such as where the license plate is located, over curved surfaces such as over bumpers and / or other complex contours of the substrate. As a result of stress relaxation of the film following the application on the substrate, the adhesive film may lift and pop-up in areas where the surface of the substrate is uneven or has a complex shape. This undesired behavior may become apparent shortly after application or after some time.

EP 2 604 664 A1 discloses an adhesive film comprising a polyvinyl chloride film having on one major side thereof an adhesive layer protected by a release liner, wherein a primer layer is arranged between the polyvinyl chloride film and the adhesive layer, the primer layer comprising an aminoplast and a polyester and/or a curing product thereof and wherein the release liner comprises on the major surface contacting the adhesive layer a series of ridges along at least two in-plane directions whereby the ridges are interconnected thereby defining a number of recesses enclosed by ridges.

Still further, there is a risk that the installed graphic film may have some visual defects such as adhesive clumping and adhesive lines. These visual defects may become apparent already during or shortly after the application, i.e., the film installation process or after some time. Adhesive clumping typically appears as clusters of dots visible on the film surface, with the dots having a diameter of about 100 to 1000 $\mu$m, across the film surface in various regions of the graphic film and is generally formed by shearing an adhesive across a substrate while in contact with that substrate before force is applied to the adhesive film laminate to attach the same to the substrate. Usually, adhesive clumping appears immediately after application of the film. Another visual defect are adhesive lines which appear also during or shortly after the installation process in certain areas of the surface of, e.g., a vehicle or car, on so-called spanned beads or gaps such as, e.g., spray nozzles, roof rails, roof ditches, handles, emblems, and deep recesses in which the adhesive film is applied and stretched. Adhesive lines are typically about 1 to 3 mm wide and about 10 $\mu$m high over a length of several centimeters. Adhesive lines also appear typically immediately after application of the adhesive film. Both visual defects, i.e., adhesive clumping and adhesive lines, typically become visible on glossy film surfaces such as glossy black surfaces or any other glossy color surfaces caused by strong light reflections of this surface type. However, both defects are also visible on satin, matt and textured film surfaces regardless from their color and should be avoided or significantly reduced.

It would now be desired to find an adhesive film that can be readily applied to a substrate, including substrates having an uneven surface or complex shape. Accordingly, the film desirably has good conformability and limited tendency for lifting or popping-up. Desirably the film has good weathering stability. The film should be readily removable after use over an extended period of time without causing damage to the surface of the substrate. Further, visual defects such as adhesive clumping and adhesive lines should be minimized.

As used herein, "a", "an", "the", "at least one" and "one or more" are used interchangeably. The term "comprise" shall include also the terms "consist essentially of" and "consists of".

Summary

In a first aspect, the present disclosure relates to an adhesive film comprising a polyvinyl chloride film having opposite first and second major sides, the first major side having an adhesive layer protected by a release liner, wherein the adhesive layer comprises a pressure sensitive adhesive, and wherein the pressure sensitive adhesive is made from a curable precursor comprising an acrylic copolymer and a crosslinker, and wherein the glass transition temperature of the acrylic copolymer is at least -30 °C, as calculated using the Fox Equation, and wherein the acrylic copolymer is made by copolymerization of a monomer composition, the monomer composition comprising

(a) a $C_1$-$C_{14}$ (meth)acrylic acid ester monomer,
(b) an acid functional, ethylenically unsaturated polar monomer, and
(c) a non-acid functional, ethylenically unsaturated polar monomer,

and wherein the amount of the $C_1$-$C_{14}$ (meth)acrylic acid ester monomer (a) is from 70 to 98 percent by weight, based on the total weight of the monomer composition, and wherein the amount of the acid functional, ethylenically unsaturated polar monomer (b) is from 1 to 15 percent by weight, based on the total weight of the monomer composition, and wherein the amount of the second polar monomer non-acid functional, ethylenically unsaturated polar monomer (c) is from 1 to 15 percent by weight, based on the total weight of the monomer composition.

In another aspect, the present disclosure also relates to a method for producing a graphic on a substrate, the method comprising

(i) providing an adhesive film as disclosed herein,
(ii) removing the release liner, and
(iii) applying the adhesive film on the substrate.

Typically, the adhesive film disclosed herein is particularly suitable for application on substrates with a complex shape and/or uneven surface. In particular, the tendency of the film to lift or pop-up, in particular in areas that have sharp or sudden changes in the evenness of the surface (for example at recesses, rivets etc.) is limited. The tendency for lifting even in deep recesses is reduced. Furthermore, in an embodiment where the adhesive comprises a channel structure, this typically does not lead to visual disturbance of the graphic after application even after a prolonged time. The film also shows good weathering stability and allows producing films of a large variety of vibrant colors including gloss black as well as films with special effects. Furthermore, visual defects such as adhesive clumping and adhesive lines are significantly reduced.

In some embodiments, the adhesive film does not require a primer layer which is often included in adhesive films used for producing a graphic on a substrate to ensure bonding between the adhesive layer and the polyvinyl chloride film.

Brief Description of Drawings

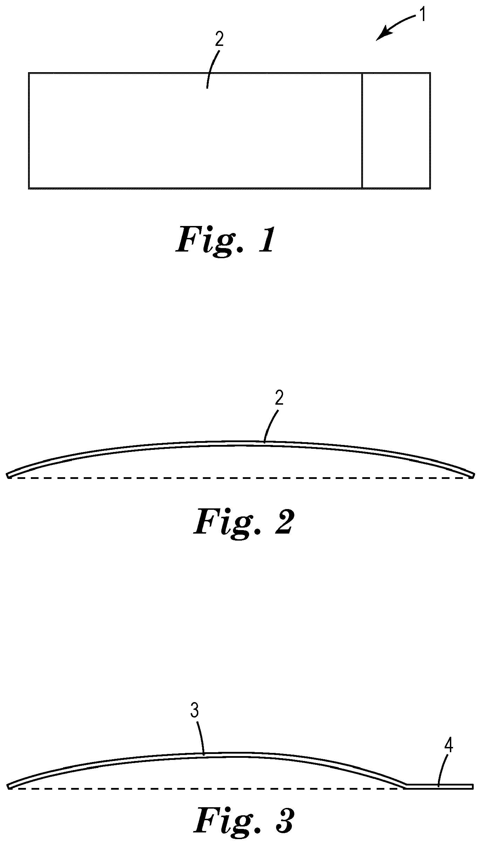

Figures 1 to 3 schematically show the preparation of test panels for the adhesive clumping test.

Detailed Description

PVC Film

The polyvinyl chloride film is typically a plasticized PVC. The PVC film may be clear transparent or may be colored. In one particular embodiment, the adhesive film is white and at least the polyvinyl chloride film is colored white. White pigments that may be used include titanium dioxide or zinc oxide. In another embodiment, the adhesive film is black and at least the PVC film is colored black. Suitable pigments for coloring the PVC film black include carbon blacks. In yet a further embodiment, an adhesive film having a metallic look, including a colored metallic look, is provided. A metallic look adhesive film may be provided, for example, by metal particles such as aluminum flakes. The metal particles may be comprised in the PVC film. Further, when in addition to the metallic effect a color effect, for example a color other than black or white, is desired a color pigment may typically be added to the PVC film.

The thickness of the PVC film may vary widely but typically is at least 20 micrometer. In a particular embodiment, the PVC film may have a thickness of 25 to 100 micrometer. In another embodiment, the thickness may be from 30 micrometer to 80 micrometer or from 30 micrometer to 60 micrometer.

As mentioned above, the PVC film may include color pigments such as white pigments, black pigments and/or color pigments other than black and white. Where the PVC film includes color pigments, they can be comprised in the PVC film in an amount of 1 to 100 parts per 100 parts by weight of PVC. The PVC film may include further optional components such as plasticizers, UV stabilizers, heat stabilizers, acrylic resins, polyesters, surfactants, and rheology modifiers. The PVC film may comprise one or more layers, depending on the specific application. For example, the PVC film may comprise more than one layer, each of them having different color pigments.

Adhesive layer

The thickness of the adhesive layer may vary widely. Typically, the adhesive layer will have a thickness of at least 10 micrometer, for example at least 15 micrometer or at least 20 micrometer. In a typical embodiment the thickness of the adhesive layer is from 15 micrometer to 50 micrometer. The adhesive layer comprises a pressure sensitive adhesive (PSA). Pressure sensitive adhesives (PSAs) may possess one or more of the following properties: (1) aggressive and permanent tack, (2) adherence with no more than finger pressure, (3) sufficient ability to hold onto an adherend, and (4) sufficient cohesive strength. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). Examples of adhesives include PSA's, hot melt or heat activated adhesives that are pressure sensitive at the time of application.

Pressure Sensitive Adhesive

The pressure sensitive adhesive used herein is made from a curable precursor. The curable precursor comprises an acrylic copolymer and a crosslinker.

The acrylic copolymer is made by copolymerization of a monomer composition, the monomer composition comprising

    (a) a $C_1$-$C_{14}$ (meth)acrylic acid ester monomer,
    (b) an acid functional, ethylenically unsaturated polar monomer, and
    (c) a non-acid functional, ethylenically unsaturated polar monomer.

A "curable precursor" is meant to designate a composition which can be cured using a curing agent or crosslinker to form a pressure sensitive adhesive.

As used herein, "(meth)acryl" is a shorthand term referring to "acryl" and/or "methacryl". For example, "$C_1$-$C_{14}$ (meth)acrylic acid ester monomer" refers to "$C_1$-$C_{14}$ acrylic acid ester monomers" and/or "$C_1$-$C_{14}$ methacrylic acid ester monomer".

A "monomer" is any chemical substance which can be characterized by a chemical formula, bearing polymerizable unsaturated groups (including (meth)acrylate groups) which can be polymerized to oligomers or polymers thereby increasing the molecular weight. The molecular weight of monomers can usually simply be calculated based on the chemical formula given.

The $C_1$-$C_{14}$ (meth)acrylic acid ester monomer may be a $C_1$, $C_2$, $C_3$, $C_4$, $C_5$, $C_6$, $C_7$, $C_8$, $C_9$, $C_{10}$, $C_{11}$, $C_{12}$, $C_{13}$ or $C_{14}$ (meth)acrylic acid ester monomer. The $C_1$-$C_{14}$ (meth)acrylic acid ester monomer can be characterized as (meth)acrylic acid ester of an alkyl alcohol, said alcohol containing from 1 to 14 carbon atoms. The term "alkyl" refers to a monovalent group which is a saturated hydrocarbon. The alkyl can be linear, branched, cyclic or combinations thereof. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl, isooctyl, and 2-propylheptyl.

The $C_1$-$C_{14}$ (meth)acrylic acid ester monomer may be selected from the group consisting of N-butyl (meth)acrylate, methyl (meth)acrylate, ethyl (meth)acrylate, hydroxyethyl (meth)acrylate, hydroxypropyl (meth)acrylate, tert-butyl (meth)acrylate, iso-butyl (meth)acrylate, iso-octyl (meth)acrylate, 2-ethylhexyl (meth)acrylate, 2-methylbutyl (meth)acrylate, isobornyl (meth)acrylate, 2-propylheptyl (meth)acrylate, cyclohexyl (meth)acrylate, benzyl (meth)acrylate, tetrahydrofurfuryl (meth)acrylate, and any mixtures thereof.

The monomer composition may comprise one type of $C_1$-$C_{14}$ (meth)acrylic acid ester monomer. The monomer composition may comprise as well two or more different types of $C_1$-$C_{14}$ (meth)acrylic acid ester monomers, such as, for example, N-butyl acrylate, N-butyl methacrylate, methyl acrylate, methyl methacrylate, tert-butyl acrylate, 2-methylbutyl acrylate, iso-butyl acrylate, iso-octyl acrylate, 2-ethylhexyl acrylate, iso-octyl methacrylate, 2-ethylhexyl methacrylate, ethyl acrylate, hydroxyethyl acrylate, or 2-propylheptyl acrylate.

If only one type of $C_1$-$C_{14}$ (meth)acrylic acid ester monomer is used, the monomer composition may comprise, for example, N-butyl acrylate, ethyl acrylate, hydroxyethyl acrylate, iso-octyl acrylate, 2-ethylhexyl acrylate, 2-methylbutyl acrylate, or iso-butyl acrylate.

Preferably, the $C_1$-$C_{14}$ (meth)acrylic acid ester monomer for use in the monomer composition is 2-methylbutyl acrylate.

The $C_1$-$C_{14}$ (meth)acrylic acid ester monomer (a) of the monomer composition may comprise

(a1) a $C_5$-$C_{14}$ (meth)acrylic acid ester monomer, and
(a2) a $C_1$-$C_4$ (meth)acrylic acid ester monomer.

The $C_1$-$C_4$ (meth)acrylic acid ester monomer may be a $C_1$, $C_2$, $C_3$ or $C_4$ (meth)acrylic acid ester monomer. The $C_1$-$C_4$ (meth)acrylic acid ester monomer can be characterized as (meth)acrylic acid ester of an alkyl alcohol, said alcohol containing from 1 to 4 carbon atoms. The term "alkyl" refers to a monovalent group which is a saturated hydrocarbon. The alkyl can be linear or branched. Examples of alkyl groups include, but are not limited to, methyl, ethyl, n-propyl, isopropyl, n-butyl, isobutyl, and tert-butyl. In some preferred embodiments, the $C_1$-$C_4$ (meth)acrylic acid ester monomer is a $C_1$ (meth)acrylic acid ester monomer.

The $C_5$-$C_{14}$ (meth)acrylic acid ester monomer may be a $C_5$, $C_6$, $C_7$, $C_8$, $C_9$, $C_{10}$, $C_{11}$, $C_{12}$, $C_{13}$ or $C_{14}$ (meth)acrylic acid ester monomer. The $C_5$-$C_{14}$ (meth)acrylic acid ester monomer can be characterized as (meth)acrylic acid ester of an alkyl alcohol, said alcohol containing from 5 to 14 carbon atoms. The term "alkyl" refers to a monovalent group which is a saturated hydrocarbon. The alkyl can be linear, branched, cyclic or combinations thereof. Examples of alkyl groups include, but are not limited to, n-pentyl, n-hexyl, cyclohexyl, n-heptyl, n-octyl, 2-ethylhexyl, 2-octyl, isooctyl, and 2-propylheptyl. In some preferred embodiments, the $C_5$-$C_{14}$ (meth)acrylic acid ester monomer may be a $C_8$ (meth)acrylic acid ester monomer.

The $C_5$-$C_{14}$ (meth)acrylic acid ester monomer for use in the monomer composition may be selected from the group consisting of iso-octyl (meth)acrylate, 2-ethylhexyl (meth)acrylate, 2-methylbutyl (meth)acrylate, isobornyl (meth)acrylate, 2-propylheptyl (meth)acrylate, cyclohexyl (meth)acrylate, benzyl (meth)acrylate, tetrahydrofurfuryl (meth)acrylate, and any mixtures thereof.

The monomer composition may comprise one type of $C_5$-$C_{14}$ (meth)acrylic acid ester monomer, such as, for example, iso-octyl acrylate, 2-ethylhexyl acrylate, iso-octyl methacrylate, or 2-ethylhexyl methacrylate. The monomer composition may comprise as well two or more different types of $C_5$-$C_{14}$ (meth)acrylic acid ester monomers.

Preferably, the $C_5$-$C_{14}$ (meth)acrylic acid ester monomer for use in the monomer composition is iso-octyl acrylate.

The $C_1$-$C_4$ (meth)acrylic acid ester monomer for use in the monomer composition may be selected from the group consisting of N-butyl (meth)acrylate, methyl (meth)acrylate, ethyl (meth)acrylate, hydroxyethyl (meth)acrylate, hydroxypropyl (meth)acrylate, tert-butyl acrylate, iso-butyl (meth)acrylate, and any mixtures thereof.

The monomer composition may comprise one type of $C_1$-$C_4$ (meth)acrylic acid ester monomer, such as, for example, N-butyl acrylate, N-butyl methacrylate, methyl acrylate, methyl methacrylate, or tert-butyl acrylate. The monomer composition may comprise as well two or more different types of $C_1$-$C_4$ (meth)acrylic acid ester monomers.

Preferably, the $C_1$-$C_4$ (meth)acrylic acid ester monomer for use in the monomer composition is methyl acrylate and/or methyl methacrylate.

The monomer composition comprises an acid functional, ethylenically unsaturated polar monomer (b). The acid functional group may be an acid per se, such as a carboxylic acid, or a portion may be a salt thereof, such as an alkali metal carboxylate. Useful acid functional monomers include, but are not limited to, those selected from ethylenically unsaturated carboxylic acids, ethylenically unsaturated sulfonic acids, ethylenicylly unsaturated phosphonic acids, and mixtures thereof.

The acid functional, ethylenically unsaturated polar monomer for use in the monomer composition may be selected from the group consisting of acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropane sulfonic acid, vinyl phosphonic acid, and mixtures thereof.

Preferably, the acid functional, ethylenically unsaturated polar monomer for use in the monomer composition is acrylic acid.

Due to their availability, the acid functional, ethylenically unsaturated polar monomer is generally selected from ethylenically unsaturated carboxylic acids, i.e. (meth)acrylic acids. When even stronger acids are desired, the acidic monomers may include the ethylenically unsaturated sulfonic acids and ethylenically unsaturated phosphonic acids.

The monomer composition may comprise one type of acid functional, ethylenically unsaturated polar monomer such as, for example, acrylic acid, methacrylic acid, itaconic acid, or fumaric acid. The monomer composition may comprise as well two or more different types of acid functional, ethylenically unsaturated polar monomers.

The monomer composition comprises a non-acid functional, ethylenically unsaturated polar monomer (c).

The non-acid functional, ethylenically unsaturated polar monomer (c) may be a nitrogen containing non-acid functional, ethylenically unsaturated polar monomer.

The non-acid functional, ethylenically unsaturated polar monomer for use herein may be selected from the group consisting of N-vinyl-2-pyrrolidone, N-vinyl caprolactam, (meth)acrylamide, mono- or di-N-alkyl-substituted acrylamide, t-butyl acrylamide, dimethylaminoethyl acrylamide, N-octyl acrylamide, N,N-dimethyl acrylamide, and mixtures thereof.

Preferably, the non-acid functional, ethylenically unsaturated polar monomer for use herein is selected from the group consisting of N-vinyl-2-pyrrolidone, N-vinyl caprolactam, N,N-dimethyl acrylamide, and mixtures thereof. More preferably, the non-acid functional, ethylenically unsaturated polar monomer for use herein is N-vinyl-2-pyrrolidone.

The monomer composition may comprise one type of non-acid functional, ethylenically unsaturated polar monomer such as, for example, N-vinyl-2-pyrrolidone, 2-hydroxyethyl (meth)acrylate, N,N-dimethyl acrylamide, or N-vinyl caprolactam. The monomer composition may comprise as well two or more different types of non-acid functional, ethylenically unsaturated polar monomers.

The amount of the $C_1$-$C_{14}$ (meth)acrylic acid ester monomer (a) is from 70 to 98 percent by weight, preferably from 80 to 96 percent by weight, more preferably from 82 to 96 percent by weight, based on the total weight of the monomer composition. The amount of the acid functional, ethylenically unsaturated polar monomer (b) is from 1 to 15 percent by weight, preferably from 2 to 10 percent by weight, more preferably from 2 to 8 percent by weight, based on the total weight of the monomer composition. The amount of the second polar monomer non-acid functional, ethylenically unsaturated polar monomer (c) is from 1 to 15 percent by weight, preferably from 2 to 10 percent by weight, based on the total weight of the monomer composition.

The amount of the $C_5$-$C_{14}$ (meth)acrylic acid ester monomer (a1) is from 30 to 85 percent by weight, based on the total weight of the monomer composition. The amount of the $C_1$-$C_4$ (meth)acrylic acid ester monomer (a2) is from 4 to 60 percent by weight, based on the total weight of the monomer composition.

The amounts of the individual monomers (a), (b), (c), (a1) and (a2) are to be understood as based on the total weight of the monomer composition without any solvent that may optionally be included in the monomer composition.

The molar ratio of the acid functional, ethylenically unsaturated polar monomer to the non-acid functional, ethylenically unsaturated polar monomer in the monomer composition may be from 0.01 to 25, or from 0.5 to 5, or from 0.5 to 4. In some embodiments, the molar ratio of the acid functional, ethylenically unsaturated polar monomer to the non-acid functional, ethylenically unsaturated polar monomer in the monomer composition is from 0.5 to 1.5, or from 0.7 to 1.2, or from 0.6 to 1.1, or from 0.8 to 1.1.

The acrylic copolymer used herein is made by copolymerization of the monomer composition, typically by free radical copolymerization. An initiator for free radical polymerization is typically added to the various monomers (a) - (c), (a1) and (a2) used to form the acrylic copolymer. The polymerization initiator can be a thermal initiator, a photoinitiator, or both. Any suitable thermal initiator or photoinitiator known for free radical polymerization reactions can be used. The initiator is typically present in an amount in the range of 0.01 to 5 percent by weight, in the range of 0.01 to 2 percent by weight, in the range of 0.01 to 1 percent by weight, or in the range of 0.01 to 0.5 percent by weight based on the total weight of the monomer composition. The amount of initiator is to be understood as based on the total weight of the monomer composition without any solvent that may optionally be included in the monomer composition.

In some embodiments, a thermal initiator is used. Thermal initiators can be water-soluble or water-insoluble (i.e., oil-soluble) depending on the particular polymerization method used. Suitable water-soluble initiators include, but are not limited to, persulfates such as potassium persulfate, ammonium persulfate, sodium persulfate, and mixtures thereof; an oxidation-reduction initiator such as the reaction product of a persulfate and a reducing agent such as a metabisulfite (e.g., sodium metabisulfite) or a bisulfate (e.g., sodium bisulfate); or 4,4'-azobis(4-cyanopentanoic acid) and its soluble salts (e.g., sodium or potassium). Suitable oil-soluble initiators include, but are not limited to, various azo compounds such as those commercially available under the trade designation VAZO from E. I. DuPont de Nemours Co. including VAZO 67, which is 2,2'-azobis(2-methylbutane nitrile), VAZO 64, which is 2,2'-azobis(isobutyronitrile), and VAZO 52, which is (2,2'-azobis(2,4-dimethylpentanenitrile); and various peroxides such as benzoyl peroxide, cyclohexane peroxide, lauroyl peroxide, and mixtures thereof.

In some embodiments, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2,-diethoxyacetophenone or 2,2-dimethoxy-2-phenylacetophenone (commercially available under the trade designation Omnirad BDK from IGM resins, Netherlands. Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxycyclohexyl phenyl ketone (Omnirad 184), bis(2,4,6-trimethylbenzoyl)phenylphosphineoxide (Omnirad 819), 1-[4-(2-hydroxyethoxy)phenyl]-2-hydroxy-2-methyl-1-propane-1-one (Omnirad 2959), 2-benzyl-2-dimethylamino-1-(4-morpholinophenyl)butanone (Omnirad 369), 2-methyl-1-[4-(methylthio)phenyl]-2-morpholinopropan-1-one (Omnirad 907), and 2-hydroxy-2-methyl-1-phenyl propan-1-one (Omnirad 1173).

The monomer composition may optionally further contain a chain transfer agent to control the molecular weight of the resultant acrylic copolymer. Examples of useful chain transfer agents include, but are not limited to, carbon tetrabromide, alcohols, mercaptans such as isooctylthioglycolate, and mixture thereof. If used, the monomer composition may include up to 0.5 percent by weight of a chain transfer agent, based on the total weight of the monomer composition. For example, the monomer composition can contain 0.01 to 0.5 percent by weight, 0.05 to 0.5 percent by weight, or 0.05 to 0.2 percent by weight of a chain transfer agent, based on the total weight of the monomer composition.

The monomer composition used to form the acrylic copolymer can include an organic solvent or can be either free or essentially free of an organic solvent. As used herein, the term "essentially free" in reference to an organic solvent means that the organic solvent is present in an amount less than 5 percent by weight, less than 4 percent by weight, less than 3 percent by weight, less than 2 percent by weight, or less than 1 percent by weight, based on the total weight of the monomer composition. Examples of suitable organic solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. Those solvents can be used alone or as mixtures thereof.

The acrylic copolymer can be prepared by a variety of conventional free radical polymerization methods, including solution, bulk (i.e., with little or no solvent), dispersion, emulsion, and suspension processes. The particular method used may be influenced by the monomer composition and the molecular weight of the acrylic copolymer. The resulting acrylic copolymer can be a random or a block copolymer. In many embodiments, the acrylic copolymer is a random copolymer.

In some preferred embodiments, the acrylic copolymer is made by solvent polymerization, with the monomer composition used to form the acrylic copolymer including an organic solvent. The amount of solvent may be, for example, from 50 to 90 percent by weight, based on the total weight of the monomer composition.

Generally, the glass transition temperature of an acrylic copolymer can be calculated from the glass transition temperature of the homopolymers of the individual monomers of the monomer composition by using the Fox Equation, i.e.:

$$1/T_g = \sum W_i/T_{g,i} .$$

In this equation, $T_g$ is the glass transition temperature of the acrylic copolymer, $W_i$ is the weight fraction of the individual monomer i, and $T_{g,i}$ is the glass transition temperature of the homopolymer of the individual monomer i. All glass transition temperatures may be either in Kelvin (K) or in °C. For two monomers A and B, the Fox equation reduces to

$$1 / T_g = W_A / T_{g,A} + W_B / T_{g,B} ,$$

where $W_A$ and $W_B$ are the weight fractions of monomers A and B, respectively, $T_{g,A}$ and $T_{g,B}$ are the glass transition temperature of the homopolymers of monomers A and B, respectively, and $T_g$ is the glass transition temperature of the acrylic copolymer.

Alternatively, the glass transition temperature can be measured in a variety of known ways, including, e.g., through differential scanning calorimetry (DSC) or dynamic mechanical thermal analysis (DMTA).

The glass transition temperature of the acrylic copolymer for use herein is at least -30 °C, as calculated using the Fox Equation. The glass transition temperature of the acrylic copolymer may be -30 °C (minus 30 °C), or higher than -30 °C, as calculated using the Fox Equation. For example, the glass transition temperature of the acrylic copolymer may be -30 °C, or -27 °C, or -25 °C, or -22 °C, or -20 °C, or -18 °C, or -15 °C, or higher, as calculated using the Fox Equation. The glass transition temperature of the acrylic copolymer may be from -30 °C to 0 °C, or from -30 °C to -15 °C, as calculated using the Fox Equation. The glass transition temperature of the acrylic copolymer is calculated using the Fox Equation from the glass transition temperature of the homopolymers of the individual monomers of the monomer composition which is used for copolymerization of the acrylic copolymer.

The acrylic copolymer of the curable precursor used for making the pressure sensitive adhesive may have a weight average molecular weight of from 300 000 to 1 500 000 g/mol, or from 400 000 to 1 200 000 g/mol, or from 500 000 to 1 000 000 g/mol.

In some embodiments, the acrylic copolymer may have a weight average molecular weight of from 500 000 to 700 000 g/mol.

Unless otherwise indicated, the weight average molecular weight of the acrylic copolymer of the curable precursor used for making the pressure sensitive adhesive is determined by conventional gel permeation chromatography (GPC) using appropriate techniques well known to those skilled in the art.

The curable precursor from which the pressure sensitive adhesive for use herein is made comprises a crosslinker.

The crosslinker may increase shear or cohesive strength of the acrylic pressure sensitive adhesive. Generally, any suitable crosslinker may be used. For example, chemical or thermal crosslinkers may be used including covalent crosslinkers such as bisamides, epoxies, and melamines; and ionic crosslinkers such as multi-functional amines, metal oxides, organo-metallic chelating agents (e.g., aluminum acetylacetonate), and multifunctional isocyanates. An example for a bisamide is 1,1'-(1,3-phenylene dicarbonyl)-bis-(2-methylaziridine) (CAS No. 7652-64-4), a multi-functional aziridine. Such chemical or thermal crosslinkers can be added into solvent-based PSAs after polymerization and activated by heat during oven drying of the coated adhesive.

In another embodiment, chemical or thermal crosslinkers which rely upon free radicals to carry out the crosslinking reaction may be employed. Reagents such as, for example, peroxides serve as a precursor source of free radicals. When heated sufficiently, these precursors will generate free radicals which bring about a crosslinking reaction of the polymer chains. A common free radical generating reagent is benzoyl peroxide. Free radical generators are required only in small quantities, but generally require higher temperatures to complete the crosslinking reaction than those required for the bisamide 1,1'-(1,3-phenylene dicarbonyl)-bis-(2-methylaziridine).

Another type of chemical crosslinker is a photosensitive crosslinker which is activated by high intensity ultraviolet (UV) light. Two common photosensitive crosslinkers used for hot melt acrylic PSAs are benzophenone and 4-acryloxybenzophenone which is copolymerized into the PSA polymer. Another photocrosslinker, which can be post-added to the solution polymer and activated by UV light is a triazine; for example 2,4-bis(trichloromethyl)-6-(4-methoxyphenyl)-s-triazine. These crosslinkers are activated by UV light generated from artificial sources such as medium pressure mercury lamps.

Aside from thermal or photosensitive crosslinkers, crosslinking may also be achieved using high energy electromagnetic radiation such as gamma or e-beam radiation.

A physical crosslinking agent may also be used. In one embodiment, the physical crosslinking agent is a high $T_g$ macromer such as those based upon polystyrene and polymethylmethacrylate.

Preferred crosslinkers for use herein are aziridine compounds, a preferred aziridine compound is 1,1'-(1,3-phenylenedicarbonyl)bis[2-methylaziridine]. Another preferred crosslinker for use herein is aluminum acetylacetonate, also referred to as Al(acac)$_3$.

Further suitable aziridine crosslinkers are described in US 2010/0227969 A1.

The amount of crosslinker included depends on well-understood factors such as the desired degree of crosslinking and the relative effectiveness of the crosslinker in the particular system.

The amount of crosslinker may be from 0.001 to 2.5 percent by weight, based on the total weight of the acrylic copolymer and the crosslinker. The amount of crosslinker is to be understood as based on the total weight of the acrylic copolymer and the crosslinker without any solvent that may optionally be included in the curable precursor.

For example, in some embodiments, the curable precursor from which the pressure sensitive adhesive used herein is made comprises from 0.001 to 0.5 percent by weight of an aziridine crosslinker such as 1,1'-(1,3-phenylenedicarbonyl)bis[2-methylaziridine], based on the total weight of the acrylic copolymer and the crosslinker. In some embodiments, the curable precursor comprises from 0.01 to 2.5 percent by weight of aluminum acetylacetonate crosslinker, based on the total weight of the acrylic copolymer and the crosslinker.

The curable precursor may optionally comprise a solvent. Examples of suitable solvents include, but are not limited to, methanol, tetrahydrofuran, ethanol, isopropanol, heptane, acetone, methyl ethyl ketone, methyl acetate, ethyl acetate, toluene, xylene, and ethylene glycol alkyl ether. Those solvents can be used alone or as mixtures thereof.

The solvent content typically is from to 50 to 90% by weight, based on the total amount of the curable precursor.

The pressure sensitive adhesive for use herein may also contain one or more conventional additives such as tackifiers, plasticizers, dyes, pigments, antioxidants, UV stabilizers and fillers.

Suitable tackifiers used for the pressure sensitive adhesives used herein can include rosin acids, rosin esters, esters of hydrogenated rosins, terpene phenolic resins, hydrocarbon resins, and cumarone indene resins. The type and amount of tackifier can affect properties such as wetting, bonding range, bond strength, heat resistance and specific adhesion.

In some preferred embodiments, the pressure sensitive adhesive for use herein does not comprise a tackifier.

The crossover modulus of the pressure sensitive adhesive for use herein may be at least 270 000 Pa.

Typically, the crossover modulus of the pressure sensitive adhesive for use herein is up to 600 000 Pa.

In some embodiments, the crossover modulus of the pressure sensitive adhesive for use herein is from 270 000 to 600 000 Pa.

The crossover modulus can be determined by rheological measurements, by small amplitude oscillatory shear tests.

The crossover modulus (G' x G") is the point in a frequency sweep, a time sweep, or a temperature ramp of small amplitude oscillatory shear tests where the storage modulus is equal to the loss modulus (units: pascals).

The crossover angular frequency (ω) is the frequency in a frequency sweep of small amplitude oscillatory shear tests at which the storage modulus is equal to the loss modulus (units: radians per second).

In some embodiments of the adhesive film disclosed herein, the monomer composition comprises

(a1) a monomer selected from the group consisting of iso-octyl acrylate, 2-ethylhexyl acrylate, 2-octyl acrylate, and mixtures thereof,
(a2) a monomer selected from the group consisting of methyl acrylate, methyl methacrylate, ethyl acrylate, and mixtures thereof,
(b) a monomer selected from the group consisting of acrylic acid, methacrylic acid, and mixtures thereof, and
(c) a monomer selected from the group consisting of N-vinyl-2-pyrrolidone, N-vinyl caprolactam, and N,N-dimethyl acrylamide,

and the amount of monomer (a1) is from 30 to 85 percent by weight, based on the total weight of the monomer composition, and the amount of monomer (a2) is from 4 to 60 percent by weight, based on the total weight of the monomer composition, and the amount of monomer (b) is from 1 to 15 percent by weight, preferably from 1 to 8 percent by weight, based on the total weight of the monomer composition, and the amount of monomer (c) is from 1 to 15 percent by weight, based on the total weight of the monomer composition, and the molar ratio of monomer (b) to monomer (c) in the monomer composition is from 0.01 to 25, preferably from 0.5 to 4.

In some embodiments of the adhesive film disclosed herein, the monomer composition comprises

(a1) iso-octyl acrylate,
(a2) methyl acrylate,
(b) acrylic acid, and
(c) N-vinyl-2-pyrrolidone,

and the amount of iso-octyl acrylate is from 30 to 85 percent by weight, based on the total weight of the monomer composition, and the amount of methyl acrylate is from 4 to 60 percent by weight, based on the total weight of the monomer composition, and the amount of acrylic acid is from 1 to 15 percent by weight, preferably from 1 to 8 percent by weight, based on the total weight of the monomer composition, and the amount of N-vinyl-2-pyrrolidone is from 1 to 15 percent by weight, based on the total weight of the monomer composition, and the molar ratio of acrylic acid to N-vinyl-2-pyrrolidone in the monomer composition is from 0.01 to 25, preferably from 0.5 to 4.

In some embodiments of the adhesive film disclosed herein, the monomer composition comprises

(a) a monomer selected from the group consisting of 2-methylbutyl acrylate, iso-octyl acrylate, ethyl acrylate, N-butyl acrylate, iso-butyl acrylate, 2-ethylhexyl acrylate, and mixtures thereof,
(b) a monomer selected from the group consisting of acrylic acid, methacrylic acid, and mixtures thereof, and
(c) a monomer selected from the group consisting of N-vinyl-2-pyrrolidone, N-vinyl caprolactam, N,N-dimethyl acrylamide, and mixtures thereof,

and the amount of monomer (a) is from 70 to 98, preferably from 80 to 96 percent by weight, based on the total weight of the monomer composition, and the amount of monomer (b) is from 1 to 15, preferably from 2 to 10 percent by weight, based on the total weight of the monomer composition, and the amount of monomer (c) is from 1 to 15, preferably from 2 to 10 percent by weight, based on the total weight of the monomer composition, and the molar ratio of monomer (b) to monomer (c) in the monomer composition is from 0.01 to 25, preferably from 0.5 to 4.

In some embodiments of the adhesive film disclosed herein, the monomer composition comprises

(a) 2-methylbutyl acrylate,
(b) acrylic acid,
(c) a monomer selected from the group consisting of N-vinyl-2-pyrrolidone, N-vinyl caprolactam, N,N-dimethyl acrylamide, and mixtures thereof,

and the amount of monomer (a) is from 70 to 98, preferably from 80 to 96 percent by weight, based on the total weight of the monomer composition, and the amount of monomer (b) is from 1 to 15, preferably from 2 to 10 percent by weight, based on the total weight of the monomer composition, and the amount of monomer (c) is from 1 to 15, preferably from 2 to 10 percent by weight, based on the total weight of the monomer composition, and the molar ratio of monomer (b) to monomer (c) in the monomer composition is from 0.01 to 25, preferably from 0.5 to 4.

In some embodiments of the adhesive film disclosed herein, the monomer composition comprises

(a1) a monomer selected from the group consisting of iso-octyl acrylate, 2-ethylhexyl acrylate, 2-octyl acrylate, and mixtures thereof,
(a2) a monomer selected from the group consisting of methyl acrylate, methyl methacrylate, ethyl acrylate, and mixtures thereof,

(b) a monomer selected from the group consisting of acrylic acid, methacrylic acid, and mixtures thereof, and
(c) a monomer selected from the group consisting of N-vinyl-2-pyrrolidone, N-vinyl caprolactam, and N,N-dimethyl acrylamide,

and the amount of monomer (a1) is from 30 to 85 percent by weight, based on the total weight of the monomer composition, and the amount of monomer (a2) is from 4 to 60 percent by weight, based on the total weight of the monomer composition, and the amount of monomer (b) is from 1 to 15 percent by weight, preferably from 1 to 8 percent by weight, based on the total weight of the monomer composition, and the amount of monomer (c) is from 1 to 15 percent by weight, based on the total weight of the monomer composition, and the molar ratio of monomer (b) to monomer (c) in the monomer composition is from 0.01 to 25, preferably from 0.5 to 4, and the crossover modulus of the pressure sensitive adhesive is at least 270 000 Pa.

In some embodiments of the adhesive film disclosed herein, the monomer composition comprises

(a1) iso-octyl acrylate,
(a2) methyl acrylate,
(b) acrylic acid, and
(c) N-vinyl-2-pyrrolidone,

and the amount of iso-octyl acrylate is from 30 to 85 percent by weight, based on the total weight of the monomer composition, and the amount of methyl acrylate is from 4 to 60 percent by weight, based on the total weight of the monomer composition, and the amount of acrylic acid is from 1 to 15 percent by weight, preferably from 1 to 8 percent by weight, based on the total weight of the monomer composition, and the amount of N-vinyl-2-pyrrolidone is from 1 to 15 percent by weight, based on the total weight of the monomer composition, and the molar ratio of acrylic acid to N-vinyl-2-pyrrolidone in the monomer composition is from 0.01 to 25, preferably from 0.5 to 4, and the crossover modulus of the pressure sensitive adhesive is at least 270 000 Pa.

In some embodiments of the adhesive film disclosed herein, the monomer composition comprises

(a) a monomer selected from the group consisting of 2-methylbutyl acrylate, iso-octyl acrylate, ethyl acrylate, N-butyl acrylate, iso-butyl acrylate, 2-ethylhexyl acrylate, and mixtures thereof,
(b) a monomer selected from the group consisting of acrylic acid, methacrylic acid, and mixtures thereof, and
(c) a monomer selected from the group consisting of N-vinyl-2-pyrrolidone, N-vinyl caprolactam, N,N-dimethyl acrylamide, and mixtures thereof,

and the amount of monomer (a) is from 70 to 98, preferably from 80 to 96 percent by weight, based on the total weight of the monomer composition, and the amount of monomer (b) is from 1 to 15, preferably from 2 to 10 percent by weight, based on the total weight of the monomer composition, and the amount of monomer (c) is from 1 to 15, preferably from 2 to 10 percent by weight, based on the total weight of the monomer composition, and the molar ratio of monomer (b) to monomer (c) in the monomer composition is from 0.01 to 25, preferably from 0.5 to 4, and the crossover modulus of the pressure sensitive adhesive is at least 270 000 Pa.

In some embodiments of the adhesive film disclosed herein, the monomer composition comprises

(a) 2-methylbutyl acrylate,
(b) acrylic acid,
(c) a monomer selected from the group consisting of N-vinyl-2-pyrrolidone, N-vinyl caprolactam, N,N-dimethyl acrylamide, and mixtures thereof,

and the amount of monomer (a) is from 70 to 98, preferably from 80 to 96 percent by weight, based on the total weight of the monomer composition, and the amount of monomer (b) is from 1 to 15, preferably from 2 to 10 percent by weight, based on the total weight of the monomer composition, and the amount of monomer (c) is from 1 to 15, preferably from 2 to 10 percent by weight, based on the total weight of the monomer composition, and the molar ratio of monomer (b) to monomer (c) in the monomer composition is from 0.01 to 25, preferably from 0.5 to 4, and the crossover modulus of the pressure sensitive adhesive is at least 270 000 Pa.

The adhesive layer should be removable, i.e., allow removal of the graphic film after use. For purposes of this disclosure, an adhesive is considered to be "removable", if after final application to an intended substrate the sheet material can be removed without damage to the substrate at the end of the intended life of the sheet material at a rate in excess of 25 feet/hour (7.62 meters/hour) by hand with the optional use of heat.

In a particular embodiment, the adhesive layer is a repositionable adhesive layer. For the purposes of this disclosure, "repositionable" refers to the ability to be, at least initially, repeatedly adhered to and removed from a substrate without substantial loss of adhesion capability. A repositionable adhesive usually has a peel strength, at least initially, to the substrate surface lower than that for a conventional aggressively tacky PSA. Suitable repositionable adhesives include the adhesive types used on CONTROLTAC Plus Film brand and on SCOTCHLITE Plus Sheeting brand, both made by 3M Company, St. Paul, Minnesota, USA.

In a particular embodiment, the adhesive layer in connection with the present disclosure is a topologically structured adhesive layer or an adhesive layer having at least one microstructured surface. In particular, the adhesive layer has a network of channels between the substrate surface on which the adhesive film is being applied and the adhesive layer. The presence of such channels allows air to pass laterally through the adhesive layer and thus allows air to escape from beneath the multi-layer sheet material and the surface substrate during application. The channels are typically produced in the adhesive layer through corresponding ridges of the release liner protecting the adhesive layer prior to application of the adhesive film. Accordingly, reference is made to the detailed description below regarding the release liner.

### Release liner

The adhesive layer is protected with a release liner. The release liner is preferably adhesive-repellant and more specifically comprises paper or film, which has been coated or modified with compounds of low surface energy relative to the adhesive applied. Organo silicone compounds, fluoropolymers, polyurethanes and polyolefins can serve this purpose. The release liner can also be a polymeric sheet produced from polyethylene, polypropylene, PVC, polyesters with or without the addition of adhesive-repellant compounds.

In a particular embodiment, the release liner has a micro-structured or micro-embossed pattern. For example, the release liner comprises on the major surface contacting the adhesive layer (i.e., on its release side facing the adhesive layer) a series of ridges along at least two in-plane directions whereby the ridges are interconnected thereby defining a number of recesses enclosed by ridges. The ridges will typically have an average height of not more than 30 micrometers. Typically, the average height may be between 5 and 20 micrometers. The average distance between ridges along an in-plane direction of the release liner may be between 50 and 400 micrometers when measured at the top. The geometry or shape of the ridges is not particularly critical and includes, in cross-section, curved, rectangular, trapezoidal, triangular, bimodal, and the like.

In a particular embodiment, the release liner comprises ridges along two in-plane directions. A first series of ridges may be formed by repeating ridges along a first in-plane direction and a second series of ridges may be formed by repeating ridges along a second in-plane direction. The ridges of the two series connect to each other at intersections, thereby defining a pattern of enclosed recesses. The enclosed recesses may have the shape of a rectangle or square. Alternative shapes of the recesses are possible as well and may be formed by additional series of ridges. In a particular embodiment the microstructure formed by the ridges on the surface of the release liner may be superimposed with a further pattern defined by discrete small depressions within the recesses defined by the interconnecting ridges. The microstructure of the release liner may be formed by any suitable means including in particular by embossing the liner with an appropriate tool. Methods for producing release liners with a desired microstructure as described herein can be found in for example EP 951 518 and US 2008/0299346.

In some embodiments of the adhesive film disclosed herein, the adhesive film comprises a primer layer arranged between the polyvinyl chloride film and the adhesive layer. The primer layer may comprise an aminoplast and a polyester and/or a curing product thereof, for example. The primer layer may contribute to the bonding between the adhesive layer and the polyvinyl chloride film.

Preferably, the adhesive film disclosed herein does not comprise a primer layer arranged between the polyvinyl chloride film and the adhesive layer. The nitrogen containing non-acid functional, ethylenically unsaturated polar monomer which is comprised in the monomer composition used to form the pressure sensitive adhesive ensures bonding to the PVC film, and a primer layer is not required.

### Optional further layers

The adhesive film may in certain embodiments contain additional layers. For example, in a particular embodiment a further clear transparent top layer may be provided on the side of the PVC film opposite to the first major side having the adhesive layer, i.e., on the second major side of the PVC film. Such a top layer may serve to enhance weatherability of the adhesive film, particularly where the film is applied horizontally such as on hood of a car. A suitable top layer may be applied by any common application method including coating, screen printing and the like. Typically, the top layer will include a polymer resin. Suitable resins include PVC, acrylic polymers and polyester such as polyethylene terephthalate and combinations thereof. The thickness of a top layer may vary widely but is typically at least 0.5 micrometer. In a particular embodiment, the thickness is from 1 to 50 micrometers.

Method of making

The adhesive film is typically made using a method comprising (i) applying on a carrier web in the order given: the optional top layer, the PVC film, the optional primer layer, the adhesive layer and the release liner and (ii) removing the carrier web. The carrier web is typically selected so as to obtain the desired finish of the adhesive film such as a gloss or matte finish, for example. Two or more layers of the adhesive film may be provided in one application step and/or individual layers of the adhesive film may be applied in separate application steps. The carrier web used in the manufacturing method includes typically a paper or film backing provided with a release coating enabling stripping and removing of the carrier web typically when all layers have been applied. Suitable release coatings on the carrier web include in particular thermoset urea resins and acrylic resins.

When present, the optional top layer may be coated on the carrier web. Typically, the top layer is provided from a solution of the constituting components of the top layer in an organic solvent on the carrier. In a particular embodiment, the top layer may be provided on the carrier web in an application step jointly with the release coating of the carrier web.

The PVC layer is typically applied to the carrier web (or the optional top layer) from a PVC organosol composition. Typically, the PVC organosol composition will include a PVC, plasticizers, heat stabilizers, dispersing agents and further optional components in a suitable solvent. Typical solvents that may be used include commercially available solvents such as Solvesso, butylglycol, Terapin (mixture of aliphatic, aromatic and naphthenic hydrocarbons), xylene and ethylacetate. Generally, the layer is heated to a temperature of between 185 °C and 210 °C for a period of 30 seconds to 240 seconds. If present, on the PVC layer is then applied the optional primer layer, for example from a composition comprising an aminoplast and a polyester, as well as further components such as pigments in an organic solvent.

The components of the primer layer may be dispersed or dissolved in organic solvents such as butylglycol. The applied primer layer is typically heated. Generally, the primer layer may be heated to a temperature of at least 140 °C or between 160 °C and 215 °C. Typically, the layer will be heated for a time between 30 seconds and 120 seconds.

The adhesive layer and release liner may be applied to the optional primer layer or to the PVC film in a number of different ways. In one particular embodiment, the adhesive layer may be coated on the optional primer layer or on the PVC film and the release liner with the desired microstructure as described above may be laminated thereto. In another embodiment, the adhesive layer may be coated on the release liner with the desired microstructure and thickness then this coated release liner may be laminated onto the primer layer, if present, or onto the PVC film.

Method of use

The adhesive film as described above is typically used to produce a graphic on a substrate. Further disclosed herein is a method for producing a graphic on a substrate, the method comprising

(i) providing an adhesive film as disclosed herein,
(ii) removing the release liner, and
(iii) applying the adhesive film on the substrate.

The graphic may be an image graphic or a text message or a combination thereof. The graphic may have any size but the adhesive films in connection with this disclosure are particularly suitable for producing large size graphics for example extending over an area of at least 1 $m^2$ or at least 2 $m^2$.

The adhesive film is particularly suitable for application on a substrate with an uneven surface. Generally, the adhesive film will then be conforming to the uneven surface of the substrate. Examples of uneven surfaces include substrates that have recesses, rivets, or areas of curvature.

The adhesive film may be applied to a large variety of substrates. Typical applications include applying the film onto building (exterior or interior) as well as on vehicles including in particular motor vehicles such as trains, busses, trams, cars, vans, trucks as well as airplanes. In connection with this disclosure, the method of producing a graphic comprises producing a graphic having a plurality of discrete units of colored adhesive film. In this method, the colored adhesive film of each of the discrete units comprises the adhesive film.

Examples

Raw materials

Acrylic acid (AA) is an acid functional, ethylenically unsaturated polar monomer obtained from BASF AG, Germany.

Iso-octyl acrylate (IOA) is a $C_8$ acrylic acid ester monomer obtained from 3M Company, St. Paul, USA.

Methyl acrylate (MA) is a $C_1$ acrylic acid ester monomer obtained from Arkema, Colombes, France.

Butyl acrylate (BA) is a $C_4$ acrylic acid ester monomer obtained from Arkema, Colombes, France.

Methyl methacrylate (MMA) is a $C_1$ acrylic acid ester monomer obtained from Dow, Inc., Midland, USA.

N-vinyl caprolactam (NVC) is a non-acid functional, ethylenically unsaturated polar monomer obtained from BASF, Germany.

N,N-dimethyl acrylamide (NNDMA) is a non-acid functional, ethylenically unsaturated polar monomer obtained from BASF, Germany.

N-vinyl-2-pyrrolidone (NVP) is a non-acid functional, ethylenically unsaturated polar monomer obtained from BASF, Germany.

2-Methylbutyl acrylate (MBA) a $C_5$ acrylic acid ester monomer obtained from BASF, Germany.

SYLVARES TP 2019 is a terpene phenolic resin tackifier (softening point 120 - 125 °C) obtained from Kraton Corporation, USA.

Isopropyl alcohol (IPA) is a chain transfer agent obtained from Shell Chemicals, USA.

Vazo 52 is an initiator (2,2'-Azobis (2,4-dimethylvaleronitrile), obtained from Chemours, USA.

Aluminum 2,4-pentanedionate is a crosslinker obtained from SACHEM Europe B.V., The Netherlands.

1,1'-(1,3-Phenylendicarbonyl)bis(2-methylaziridin) is a crosslinker obtained from 3M, St. Paul, Company.

Test methods

General procedure for preparation of acrylic copolymer (adhesive solution)

For Example 10, to a bottle were added 59 grams of iso-octyl acrylate (IOA), 31 grams of methyl acrylate (MA), 4 grams of acrylic acid (AA), 6 grams of N-vinyl-2-pyrrolidone (NVP), and 2.25 g of isopropyl alcohol (IPA). The bottle also contained 183.45 grams of ethyl acetate (EtOAc, a solvent) and 0.100 grams of Vazo-52. This mixture was purged with nitrogen to remove all oxygen and the bottle was then sealed. This sealed bottle was placed in a water bath and heated at 52° C for 24 hours. The final sample was a clear, viscous solution. The clear, viscous solution is an acrylic copolymer dissolved in ethyl acetate (also referred to as "adhesive solution"). The content of acrylic copolymer, also referred to as "solid content" (determined by drying the sample at 105° C for 3 hours) is shown in Table 2. The monomer composition is shown in Table 1 (in weight percent, based on the total weight of the monomer composition without solvent).

The weight average molecular weight (Mw) of the obtained acrylic copolymer was determined by conventional gel permeation chromatography (GPC) and is shown in Table 2.

Preparation of adhesive film (film laminate preparation)

For the film laminate preparation, a crosslinker dissolved in a solvent was added to the adhesive solution prepared as described above, stirred for approximately 5 to 10 minutes with a paddle mixer, and allowed to dwell for approximately 5 minutes to remove potential entrapped air before coating.

The obtained mixture was then coated onto a release liner which was siliconized on one side and provided with 3M Comply™ microchannel pattern structure and 3M Controltac™ non-adhesive protrusions, with a dry weight of 34 - 36 g/m². The coating process was carried out on a pilot coating line with a coating width of maximum 30 cm under constant coating speed of 5 m/min using a nip-feed die. After the coating process, drying was carried out on the pilot line. The drying temperature profile was adjusted via different temperature zones in a drying oven with a total length of 12.5 m, using temperature zones of 30, 30, 40, 60, and 95 °C. The obtained film is an adhesive layer of a pressure sensitive adhesive coated onto the release liner. After drying, a PVC film (gloss black multilayer film with black base layer and transparent top layer) was laminated under constant speed and pressure (70 - 80 psi) to the film obtained from the drying oven using a table laminator. The obtained laminated sample was allowed to dwell under constant room temperature conditions for 7 days before further investigations have been conducted (adhesive clumping tests, rheology tests).

Adhesive Clumping Test

To measure the adhesive clumps, a laboratory test method was used to consistently reproduce adhesive clumps on a small bended test panel. The test panel was prepared from a 2.5-inch (6.35 cm) wide painted aluminum sheet, i.e., an aluminum sheet coated with paint on one side, which was cut to a length of 7.5 inches (19.05 cm). The painted aluminum sheet 1 was then uniformly bent with the painted side 2 on the convex side to a center arch having a height of 4.3 mm in a 3-roll panel bender (see Figure 2, showing a side view of the painted aluminum sheet after this bending step).

At a distance of one inch from one end (i.e., from one of the two smaller sides) of the aluminum sheet, the aluminum sheet was manually bent, parallel to the two smaller sides, so that the resulting test panel had a flat portion 4 at a length of one inch on one end (see Figure 3, showing a side view of the test panel as used for the adhesive clumping test). The remaining portion 3 on the other end of the test panel has an arched form, with the end of the arched portion which is on the other end of the test panel than the flat portion lying in the same plane as the flat portion (see Figure 3). Figure 1 shows a top view of the test panel, with the dotted line indicating the position at one inch from one end of the test panel where the panel was manually bent.

A strip of adhesive film (prepared as described above) in a size of 2 x 9 inch (5.08 x 22.86 cm) was adhered with one of its smaller ends to the flat end of the painted side of the test panel. The flat end of the test panel with the adhesive film adhered to it was fixed into the fixed end of a load frame, with the test panel being in a vertical position with its longer dimension. After completely removing the release liner, the film was fed into a movable grip positioned 0.5 inch above the upper end of the test panel, with the adhesive side being directed to the test panel and free of wrinkles. The total length between the movable grip and the fixed end of the load frame is 7 inches (17.78 cm). The film was pulled by moving of the movable grip with 12 in/min (30.48 cm/min) to an elongation of 0.7 inches (1.778 cm) equal to 10 % strain. Pressure was applied to the film with a squeegee once the film was stretched to adhere it completely to the test panel. The panel was then kept for 5 minutes at 150 F (66 °C). The number of adhesive clumps on the test panel was counted at a consistent angle such that any presence of clumping was captured. For a quantitative evaluation all clumps on the test panel were counted in the middle area, i.e., on the whole test panel with the exception of the two peripheral zones, each with a width of 3 mm, along the two longer sides of the test panel. All clumps visible to the naked eye have been counted. The typical diameter of the counted clumps is from 100 to 1000 $\mu$m.

Adhesive Line Test

A strip of adhesive film (prepared as described above) having a width of 25 cm and a length of 50 cm was used to perform the adhesive line test. After removing the release liner, the adhesive film was applied onto a single recess area according to 3M Instruction Bulletin IB 5.46 - Application on Substrates with Recesses. No adhesion promoters have been used to execute this test. The recess has a circumferential edge and a flat region inside the recess, with the flat region inside the recess being in a lower plane than the flat region outside the recess. In the flat region inside the recess, there is an adhesive line which is typically formed about 1 to 2 cm near the edge of the recess. The adhesive line was localized with the naked eye and then an impression was formed with a molding material to allow an exact measurement of the adhesive line afterwards. For the mold-making step 3M™ Imprint™ II Garant™ was used. Once the adhesive line was localized, two strands of mold-making material having a thickness of about 0.5 cm and a length of about 10 cm were placed above and below the detected adhesive line. Then the molding material was carefully squeezed down with an aluminum plate to allow a complete wet out and transfer of adhesive line into the molding material. After 5 minutes, the molding material was fully cured, and an impression of the adhesion line was formed. The cured molding material was removed together with the aluminum plate from the adhesive film surface, and then the adhesive line in the impression generated with the molding material was analyzed using a 3D Profilometer VR-5200 from Keyence Company.

Rheology Test

To prepare a sample for the rheology test, several film stripes having a width of approximately 6 cm and a length of 30 cm of an adhesive layer of a pressure sensitive adhesive coated on a release liner prepared as described above (but without a PVC film laminated onto the film) were used. One of the film samples was carefully folded with the adhesive sides to each other and fixed under mild pressure with a PSA hand roller. After the folding step, the release liner on top of the folded sample was removed so that a further adhesive side of another folded film sample could be adhered onto the sample (with the release liner of the other folded film sample removed on the side adhered onto the sample). This was repeated multiple times. Air entrapment should be prevented during the layer folding process. The sample obtained by this layer folding process was a sample of the pressure sensitive adhesive having a thickness of 500 - 1000 $\mu$m. With this sample, small amplitude oscillatory shear tests were carried out using an Anton Paar MCR 302 rheometer equipped with a plate-plate geometry and a diameter of d = 8 mm at T = 23 $\pm$ 0.2 °C using a Peltier heating plate and hood. Measurements were done in the linear response regime covering a frequency range from 0.01 to 100 Hz. To assure permanent contact between measuring equipment and sample a normal force of F = 2 N was applied during the measurement. The instrument operated in a stress-controlled mode and amplitude sweeps at a frequency of f = 1 Hz were performed prior to each frequency sweep to identify the linear viscoelastic response regime. All frequency sweeps were done at stress amplitudes $\tau 0 \leq 100$ Pa to assure linear response. The crossover modulus G' x G" in Pa at the angular frequency $\omega$ in rad/s was recorded.

Examples 1 to 17 (EX1 to EX17) and Comparative Examples 1 to 11 (CEX1 to CEX11)

For Examples 1 to 17 and Comparative Examples 1 to 5, acrylic copolymers were prepared following the general procedure described above for Example 10, with monomer compositions as shown in Table 1, and with weight average molecular weights as shown in Table 2. The amount of chain transfer agent (isopropyl alcohol) used for copolymerization of the acrylic copolymer is also shown in Table 2. The amounts of chain transfer agent shown in Table 2 are in parts by weight, added to 100 parts by weight of the monomer composition (i.e., without considering the solvent of the monomer composition).

Adhesive Films were prepared following the general procedure described above, with amounts of crosslinker as shown in Table 2. The amounts of crosslinker in Table 2 are in percent by weight, based on the total amount of acrylic copolymer and crosslinker (i.e., without considering the solvent for calculating the weight percentage). As crosslinker, 1,1'-(1,3-phenylendicarbonyl)bis(2-methylaziridin) was used (as a 5% solution in toluene) for all examples and comparative examples, with the exception of Comparative Example 3 and Example 17. For Comparative Example 3 and Example 17, aluminum 2,4-pentanedionate (also referred to as aluminum acetyl acetonate, $Al(acac)_3$) was used as crosslinker (as a 10% solution in toluene). For CEX1, 16 parts by weight of SYLVARES TP 2019 tackifier were added to 100 parts by weight of acrylic copolymer.

Adhesive clumping tests and rheology tests were performed using the test methods described above. Test results are shown in Table 3.

For Comparative Example 1 and Examples 10 and 16, an adhesive line test was performed using the test method described above. The results are shown in Table 4.

Table 1:

| Example | IOA [wt%] | MA [wt%] | BA [wt%] | MMA [wt%] | NVC [wt%] | NNDMA [wt%] | MBA [wt%] | AA [wt%] | NVP [wt%] |
|---|---|---|---|---|---|---|---|---|---|
| CEX1 | 93 | - | - | - | - | - | - | 7 | - |
| CEX2 | - | - | - | - | - | - | 90 | 10 | - |
| CEX3 | 74.5 | 15 | - | - | - | - | - | 3.5 | 7 |
| CEX4 | 90 | - | - | - | - | - | - | 10 | - |
| CEX5 | 75 | 15 | - | - | - | - | - | 4 | 6 |
| CEX6 | 59 | - | 31 | - | - | - | - | 4 | 6 |
| CEX7 | 59 | - | 31 | - | - | - | - | 4 | 6 |
| CEX8 | 59 | - | 31 | - | - | - | - | 4 | 6 |
| CEX9 | - | - | 90 | - | - | - | - | 4 | 6 |
| CEX10 | 84 | 4.66 | - | - | 7.4 | - | - | 3.94 | - |
| CEX11 | 75 | 13.66 | - | - | 7.4 | - | - | 3.94 | - |
| EX1 | - | - | - | - | - | - | 90 | 5 | 5 |
| EX2 | - | - | - | - | - | - | 90 | 5 | 5 |
| EX3 | 59 | 31 | - | - | - | - | - | 5 | 5 |
| EX4 | 59 | 31 | - | - | - | - | - | 5 | 5 |
| EX5 | 59 | 31 | - | - | - | - | - | 3 | 7 |
| EX6 | 59 | 31 | - | - | - | - | - | 5 | 5 |
| EX7 | 59 | 31 | - | - | - | - | - | 7 | 3 |
| EX8 | 59 | 31 | - | - | - | - | - | 3 | 7 |
| EX9 | 59 | 31 | - | - | - | - | - | 5 | 5 |
| EX10 | 59 | 31 | - | - | - | - | - | 4 | 6 |
| EX11 | 40 | 50 | - | - | - | - | - | 4 | 6 |
| EX12 | 61 | 25 | - | - | - | - | - | 4 | 10 |
| EX13 | 63 | 25.66 | - | - | 7.4 | - | - | 3.94 | - |
| EX14 | 59 | 32.1 | - | - | - | 5.1 | - | 3.8 | - |

(continued)

| Example | IOA [wt%] | MA [wt%] | BA [wt%] | MMA [wt%] | NVC [wt%] | NNDMA [wt%] | MBA [wt%] | AA [wt%] | NVP [wt%] |
|---|---|---|---|---|---|---|---|---|---|
| EX15 | 73 | - | - | 17 | - | - | - | 4 | 6 |
| EX16 | 59 | 31 | - | - | - | - | - | 3.6 | 6.4 |
| EX17 | 59 | 31 | - | - | - | - | - | 3.6 | 6.4 |

Table 2:

| Example | Molar ratio of monomer (b) : monomer (c) [a] | CTA[b] [parts byweight] | Mw of AC[c] [g/mol] | Fox $T_g$ of AC[d] [°C] | Amount of crosslinker [wt.%] | Content of AC in adhesive solution [e] [wt.%] |
|---|---|---|---|---|---|---|
| CEX1 | - | 0 | 1 905 201 | -48.3 | 0.084 | 25 |
| CEX2 | - | 3.75 | 373 151 | -22.9 | 0.158 | 40 |
| CEX3 | 0.77 | 3.5 | 420 751 | -37.0 | 0.6 | 48 |
| CEX4 | - | 3.0 | 494 208 | -45.5 | 0.285 | 40 |
| CEX5 | 1.03 | 2.25 | 649 640 | -37.5 | 0.175 | 35 |
| CEX6 | 1.03 | 1.07 | 854 611 | -42.6 | 0.175 | 35 |
| CEX7 | 1.03 | 2.25 | 538 780 | -42.6 | 0.255 | 35 |
| CEX8 | 1.03 | 0 | 1 196 703 | -42.6 | 0.07 | 35 |
| CEX9 | 1.03 | 2.25 | 538 780 | -36.0 | 0.175 | 35 |
| CEX10 | 1.03 | 1.0 | 829 614 | -39.9 | 0.175 | 35 |
| CEX11 | 1.03 | 1.77 | 724 510 | -34.6 | 0.175 | 35 |
| EX1 | 1.50 | 2 | 661 198 | -23.4 | 0.18 | 40 |
| EX2 | 1.50 | 1.5 | 748 932 | -23.4 | 0.18 | 40 |
| EX3 | 1.50 | 0.3 | 942 649 | -27.6 | 0.223 | 40 |
| EX4 | 1.50 | 2.6 | 577 729 | -27.6 | 0.223 | 40 |
| EX5 | 0.70 | 2.3 | 620 623 | -27.8 | 0.21 | 37.5 |
| EX6 | 1.50 | 2.5 | 597 354 | -27.6 | 0.225 | 37.5 |
| EX7 | 3.60 | 2.7 | 590 377 | -27.5 | 0.225 | 37.5 |
| EX8 | 0.70 | 1.5 | 748 622 | -27.8 | 0.21 | 35 |
| EX9 | 1.50 | 1.5 | 820 046 | -27.6 | 0.07 | 35 |
| EX10 | 1.03 | 2.25 | 717 484 | -27.7 | 0.16 | 35 |
| EX11 | 1.03 | 2.25 | 755 160 | -15.0 | 0.145 | 35 |
| EX12 | 0.62 | 2.25 | 666 319 | -27.2 | 0.25 | 35 |
| EX13 | 1.03 | 2.25 | 693 916 | -27.2 | 0.145 | 35 |
| EX14 | 1.03 | 2.25 | 687 027 | -28.2 | 0.145 | 35 |
| EX15 | 1.03 | 0 | 746 087 | -27.5 | 0.175 | 40 |

(continued)

| Example | Molar ratio of monomer (b) : monomer (c) [a] | CTA[b] [parts byweight] | Mw of AC[c] [g/mol] | Fox $T_g$ of AC[d] [°C] | Amount of crosslinker [wt.%] | Content of AC in adhesive solution [e] [wt.%] |
|---|---|---|---|---|---|---|
| EX16 | 0.87 | 0 | 681 556 | -27.8 | 0.16 | 35 |
| EX17 | 0.87 | 0 | 681 556 | -27.8 | 0.22 | 35 |
| [a] "Molar ratio of monomer (b) : monomer (c)" is the molar ratio of the acid functional, ethylenically unsaturated polar monomer (b) to the non-acid functional, ethylenically unsaturated polar monomer (c) in the monomer composition. [b] "CTA" is the amount of chain transfer agent in parts by weight, added to 100 parts by weight of monomer composition. [c] "Mw of AC" is the weight average molecular weight of the acrylic copolymer. [d] "Fox $T_g$ of AC" is the glass transition temperature of the acrylic copolymer, as calculated using the Fox Equation. [e] "Content of AC in adhesive solution" is the content of acrylic copolymer in the adhesive solution. | | | | | | |

It can be seen from Table 3 that the Comparative Examples have an average number of dots as determined by the adhesive clumping test which is above 10, whereas the Examples according to the present disclosure have an average number of dots as determined by the adhesive clumping test which is below 10. This shows that the examples according to the present disclosure have a better performance with respect to adhesive clumping than the comparative examples. The Fox $T_g$ of the acrylic copolymer used for the Comparative Examples 1 and 3-11 is below -30 °C. Comparative Example 2 does not comprise a non-acid functional, ethylenically unsaturated polar monomer.

Table 3:

| | Average number of dots (adhesive clumping test) | Crossover modulus G' x G" [Pa] | Angular frequency $\omega$ at G' x G" [rad/s] |
|---|---|---|---|
| CEX1 | 25 | 149 640 | 11.8 |
| CEX2 | 39 | 282 590 | 10.5 |
| CEX3 | 30 | 297 480 | 41.9 |
| CEX4 | 21 | 223 200 | 26.3 |
| CEX5 | 33 | 203 580 | 50.4 |
| CEX6 | 41 | 102 460 | 68.5 |
| CEX7 | 89 | 229 660 | 144.5 |
| CEX8 | 36 | 195 880 | 147.1 |
| CEX9 | 23 | 151 780 | 92.4 |
| CEX10 | 45 | 145 840 | 80.4 |
| CEX11 | 17 | 357 040 | 137.4 |
| EX1 | 1 | 330 000 | 58.8 |
| EX2 | 0 | 348 540 | 32.7 |
| EX3 | 0 | 323 020 | 17.1 |
| EX4 | 0 | 373 500 | 33.3 |
| EX5 | 2 | 386 460 | 24.2 |
| EX6 | 2 | 395 540 | 17.4 |
| EX7 | 1 | 411 450 | 13.8 |
| EX8 | 3 | 364 960 | 31.1 |
| EX9 | 6 | 399 480 | 24.6 |

(continued)

| | Average number of dots (adhesive clumping test) | Crossover modulus G' x G" [Pa] | Angular frequency ω at G' x G" [rad/s] |
|---|---|---|---|
| EX10 | 4 | 383 420 | 33.8 |
| EX11 | 4 | 390 010 | 5.8 |
| EX12 | 5 | 355 090 | 15.5 |
| EX13 | 7 | 306 570 | 30.1 |
| EX14 | 6 | 282 040 | 51.0 |
| EX15 | 5 | 309 360 | 9.3 |
| EX16 | 5 | n.d. | n.d. |
| EX17 | 7 | n.d. | n.d. |
| n.d. = not determined | | | |

Table 4:

| | Width of adhesive line [mm] | Height of adhesive line [mm] | Cross sectional area of adhesive line [mm$^2$] |
|---|---|---|---|
| CEX1 | 1.299 | 0.008 | 0.006 |
| EX10 | 1.157 | 0.004 | 0.002 |
| EX16 | 1.209 | 0.004 | 0.002 |

**Claims**

1. An adhesive film comprising a polyvinyl chloride film having opposite first and second major sides, the first major side having an adhesive layer protected by a release liner, wherein the adhesive layer comprises a pressure sensitive adhesive, and wherein the pressure sensitive adhesive is made from a curable precursor comprising an acrylic copolymer and a crosslinker, and wherein the glass transition temperature of the acrylic copolymer is at least -30 °C, as calculated using the Fox Equation, and wherein the acrylic copolymer is made by copolymerization of a monomer composition, the monomer composition comprising

   (a) a $C_1$-$C_{14}$ (meth)acrylic acid ester monomer,
   (b) an acid functional, ethylenically unsaturated polar monomer, and
   (c) a non-acid functional, ethylenically unsaturated polar monomer,

   and wherein the amount of the $C_1$-$C_{14}$ (meth)acrylic acid ester monomer (a) is from 70 to 98 percent by weight, based on the total weight of the monomer composition, and wherein the amount of the acid functional, ethylenically unsaturated polar monomer (b) is from 1 to 15 percent by weight, based on the total weight of the monomer composition, and wherein the amount of the non-acid functional, ethylenically unsaturated polar monomer (c) is from 1 to 15 percent by weight, based on the total weight of the monomer composition.

2. The adhesive film of claim 1, wherein the $C_1$-$C_{14}$ (meth)acrylic acid ester monomer is selected from the group consisting of N-butyl (meth)acrylate, methyl (meth)acrylate, ethyl (meth)acrylate, hydroxyethyl (meth)acrylate, hydroxypropyl (meth)acrylate, tert-butyl acrylate, iso-butyl (meth)acrylate, iso-octyl (meth)acrylate, 2-ethylhexyl (meth)acrylate, 2-methylbutyl (meth)acrylate, isobornyl (meth)acrylate, 2-propylheptyl (meth)acrylate, cyclohexyl (meth)acrylate, benzyl (meth)acrylate, tetrahydrofurfuryl (meth)acrylate, and any mixtures thereof.

3. The adhesive film of claim 1 or 2, wherein the $C_1$-$C_{14}$ (meth)acrylic acid ester monomer (a) of the monomer composition comprises

(a1) a $C_5$-$C_{14}$ (meth)acrylic acid ester monomer, and
(a2) a $C_1$-$C_4$ (meth)acrylic acid ester monomer,

and wherein the amount of the $C_5$-$C_{14}$ (meth)acrylic acid ester monomer (a1) is from 30 to 85 percent by weight, based on the total weight of the monomer composition, and wherein the amount of the $C_1$-$C_4$ (meth)acrylic acid ester monomer (a2) is from 4 to 60 percent by weight, based on the total weight of the monomer composition.

4. The adhesive film of claim 2 or 3, wherein the $C_5$-$C_{14}$ (meth)acrylic acid ester monomer is selected from the group consisting of iso-octyl (meth)acrylate, 2-ethylhexyl (meth)acrylate, 2-methylbutyl (meth)acrylate, isobornyl (meth)acrylate, 2-propylheptyl (meth)acrylate, cyclohexyl (meth)acrylate, benzyl (meth)acrylate, tetrahydrofurfuryl (meth)acrylate, and any mixtures thereof.

5. The adhesive film of any of claims 2 to 4, wherein the $C_1$-$C_4$ (meth)acrylic acid ester monomer is selected from the group consisting of N-butyl (meth)acrylate, methyl (meth)acrylate, ethyl (meth)acrylate, hydroxyethyl (meth)acrylate, hydroxypropyl (meth)acrylate, tert-butyl acrylate, iso-butyl (meth)acrylate, and any mixtures thereof.

6. The adhesive film of any of claims 1 to 5, wherein the acid functional, ethylenically unsaturated polar monomer is selected from the group consisting of acrylic acid, methacrylic acid, itaconic acid, fumaric acid, crotonic acid, citraconic acid, maleic acid, oleic acid, β-carboxyethyl (meth)acrylate, 2-sulfoethyl methacrylate, styrene sulfonic acid, 2-acrylamido-2-methylpropane sulfonic acid, vinyl phosphonic acid, and mixtures thereof.

7. The adhesive film of any of claims 1 to 6, wherein the non-acid functional, ethylenically unsaturated polar monomer is selected from the group consisting of N-vinyl-2-pyrrolidone, 2-hydroxyethyl meth)acrylate, N-vinyl caprolactam, (meth)acrylamide, mono- or di-N-alkyl-substituted acrylamide, t-butyl acrylamide, dimethylaminoethyl acrylamide, N-octyl acrylamide, N,N-dimethyl acrylamide, and mixtures thereof.

8. The adhesive film of any of claims 1 to 7, wherein the amount of the $C_1$-$C_{14}$ (meth)acrylic acid ester monomer (a) is from 80 to 96 percent by weight, based on the total weight of the monomer composition, and wherein the amount of the acid functional, ethylenically unsaturated polar monomer (b) is from 2 to 10 percent by weight, based on the total weight of the monomer composition, and wherein the amount of the non-acid functional, ethylenically unsaturated polar monomer (c) is from 2 to 10 percent by weight, based on the total weight of the monomer composition.

9. The adhesive film of any of claims 1 to 8, wherein the crosslinker is an aziridine compound, preferably 1,1'-(1,3-phenylenedicarbonyl)bis[2-methylaziridine].

10. The adhesive film of any of claims 1 to 9, wherein the adhesive film does not comprise a primer layer arranged between the polyvinyl chloride film and the adhesive layer.

11. The adhesive film of any of claims 1 to 10, wherein the release liner comprises on the major surface contacting the adhesive layer a series of ridges along at least two in-plane directions whereby the ridges are interconnected thereby defining a number of recesses enclosed by ridges.

12. The adhesive film of any of claims 1 to 11, wherein the acrylic copolymer has a weight average molecular weight of from 300 000 to 1 500 000 g/mol.

13. The adhesive film of any of claims 1 to 12, wherein the amount of crosslinker is from 0.001 to 2.5 percent by weight, based on the total weight of the acrylic copolymer and the crosslinker.

14. The adhesive film of any of claims 1 to 13, wherein the molar ratio of the acid functional, ethylenically unsaturated polar monomer to the non-acid functional, ethylenically unsaturated polar monomer in the monomer composition is from 0.01 to 25, preferably from 0.5 to 4.

15. The adhesive film of any of claims 1 to 14, wherein the crossover modulus of the pressure sensitive adhesive is at least 270 000 Pa.

16. The adhesive film of any of claims 1 to 15, wherein the monomer composition comprises

(a1) a monomer selected from the group consisting of iso-octyl acrylate, 2-ethylhexyl acrylate, 2-octyl acrylate, and mixtures thereof,
(a2) a monomer selected from the group consisting of methyl acrylate, methyl methacrylate, ethyl acrylate, and mixtures thereof,
(b) a monomer selected from the group consisting of acrylic acid, methacrylic acid, and mixtures thereof, and
(c) a monomer selected from the group consisting of N-vinyl-2-pyrrolidone, N-vinyl caprolactam, and N,N-dimethyl acrylamide,

and wherein the amount of monomer (a1) is from 30 to 85 percent by weight, based on the total weight of the monomer composition, and wherein the amount of monomer (a2) is from 4 to 60 percent by weight, based on the total weight of the monomer composition, and wherein the amount of monomer (b) is from 1 to 15 percent by weight, preferably from 1 to 8 percent by weight, based on the total weight of the monomer composition, and wherein the amount of monomer (c) is from 1 to 15 percent by weight, based on the total weight of the monomer composition, and wherein the molar ratio of monomer (b) to monomer (c) in the monomer composition is from 0.01 to 25, preferably from 0.5 to 4.

17. The adhesive film of any of claims 1 to 15, wherein the monomer composition comprises

(a) a monomer selected from the group consisting of 2-methylbutyl acrylate, iso-octyl acrylate, ethyl acrylate, N-butyl acrylate, iso-butyl acrylate, 2-ethylhexyl acrylate, and mixtures thereof,
(b) a monomer selected from the group consisting of acrylic acid, methacrylic acid, and mixtures thereof, and
(c) a monomer selected from the group consisting of N-vinyl-2-pyrrolidone, N-vinyl caprolactam, N,N-dimethyl acrylamide, and mixtures thereof,

and wherein the amount of monomer (a) is from 70 to 98, preferably from 80 to 96 percent by weight, based on the total weight of the monomer composition, and wherein the amount of monomer (b) is from 1 to 15, preferably from 2 to 10 percent by weight, based on the total weight of the monomer composition, and wherein the amount of monomer (c) is from 1 to 15, preferably from 2 to 10 percent by weight, based on the total weight of the monomer composition, and wherein the molar ratio of monomer (b) to monomer (c) in the monomer composition is from 0.01 to 25, preferably from 0.5 to 4.

18. A method for producing a graphic on a substrate, the method comprising

(i) providing an adhesive film according to any of claims 1 to 17,
(ii) removing the release liner, and
(iii) applying the adhesive film on the substrate.

19. The method of claim 18, wherein the substrate comprises a vehicle.

20. The method of claim 18 or 19, wherein the substrate comprises an uneven surface and wherein the adhesive film is applied over the uneven surface conforming thereto.

**Fig. 1**

**Fig. 2**

**Fig. 3**

Europäisches
Patentamt

European
Patent Office

Office européen
des brevets

# EUROPEAN SEARCH REPORT

Application Number

EP 21 20 6241

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2002/115808 A1 (PELOQUIN RICHARD L [US] ET AL) 22 August 2002 (2002-08-22)<br>* paragraph [0002] *<br>* paragraph [0017] *<br>* paragraph [0038] – paragraph [0052] *<br>* paragraph [0092]; table 4 *<br>* paragraph [0093]; table 5 *<br>* paragraph [0095]; table 7 *<br>* claims 1-30 *<br>----- | 1-11, 13-20<br>12 | INV.<br>C09J7/38<br>B44C1/00 |
| X<br>Y | US 2021/189184 A1 (TSUNASHIMA MARIKO [JP] ET AL) 24 June 2021 (2021-06-24)<br>* paragraph [0002] *<br>* paragraph [0062] – paragraph [0065] *<br>* page 6; examples 1-11; table 1 *<br>* claims 1-20 *<br>----- | 1-11, 13-20<br>12 | |
| A | CN 112 831 006 A (ZHONGSHI HUIHUA SYNTHETIC MAT CO LTD)<br>25 May 2021 (2021-05-25)<br>* claims 1-10 *<br>----- | 1-20 | |
| Y | US 2008/105356 A1 (MIKAMI HARUYUKI [JP] ET AL) 8 May 2008 (2008-05-08)<br>* paragraph [0003] *<br>* figures 1-8 *<br>* claims 1-16 *<br>----- | 12 | TECHNICAL FIELDS SEARCHED (IPC)<br><br>C09J<br>C08J<br>B44F<br>B44C |

The present search report has been drawn up for all claims

| Place of search | Date of completion of the search | Examiner |
|---|---|---|
| Munich | 6 May 2022 | Siemsen, Beatrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 6241

This annex lists the patent family members relating to the patent documents cited in  the above-mentioned European search report.
The members are as contained in the European Patent Office EDP file on
The European Patent Office is in no way liable for these particulars which are merely given for the purpose of information.

06-05-2022

| Patent document cited in search report | | Publication date | Patent family member(s) | | Publication date |
|---|---|---|---|---|---|
| US 2002115808 | A1 | 22-08-2002 | AU | 1325700 A | 02-01-2001 |
| | | | US | 6441114 B1 | 27-08-2002 |
| | | | WO | 0077117 A1 | 21-12-2000 |
| US 2021189184 | A1 | 24-06-2021 | CN | 112105701 A | 18-12-2020 |
| | | | JP | 6844751 B2 | 17-03-2021 |
| | | | JP | WO2019239688 A1 | 17-12-2020 |
| | | | TW | 202000838 A | 01-01-2020 |
| | | | US | 2021189184 A1 | 24-06-2021 |
| | | | WO | 2019239688 A1 | 19-12-2019 |
| CN 112831006 | A | 25-05-2021 | NONE | | |
| US 2008105356 | A1 | 08-05-2008 | AU | 6412499 A | 05-12-2000 |
| | | | BR | 9917295 A | 13-02-2002 |
| | | | CA | 2371569 A1 | 23-11-2000 |
| | | | CN | 1352674 A | 05-06-2002 |
| | | | DE | 69929812 T2 | 19-10-2006 |
| | | | EP | 1180127 A1 | 20-02-2002 |
| | | | ES | 2258340 T3 | 16-08-2006 |
| | | | JP | 3550096 B2 | 04-08-2004 |
| | | | JP | 3950115 B2 | 25-07-2007 |
| | | | JP | 4845622 B2 | 28-12-2011 |
| | | | JP | 5074229 B2 | 14-11-2012 |
| | | | JP | 2002544364 A | 24-12-2002 |
| | | | JP | 2004149811 A | 27-05-2004 |
| | | | JP | 2006299283 A | 02-11-2006 |
| | | | JP | 2008169399 A | 24-07-2008 |
| | | | KR | 20020034079 A | 08-05-2002 |
| | | | MX | PA01011500 A | 30-07-2002 |
| | | | US | 6524675 B1 | 25-02-2003 |
| | | | US | 2003178124 A1 | 25-09-2003 |
| | | | US | 2006188704 A1 | 24-08-2006 |
| | | | US | 2008105356 A1 | 08-05-2008 |
| | | | US | 2013068367 A1 | 21-03-2013 |
| | | | US | 2015298446 A1 | 22-10-2015 |
| | | | US | 2018222173 A1 | 09-08-2018 |
| | | | WO | 0069985 A1 | 23-11-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0951518 A
- EP 2604664 A1
- US 20100227969 A1
- EP 951518 A
- US 20080299346 A

**Non-patent literature cited in the description**

- *CHEMICAL ABSTRACTS,* 7652-64-4